# EUROPÄISCHE PATENTSCHRIFT

(11) **EP 3 487 642 B1**
(45) Veröffentlichungstag und Bekanntmachung des Hinweises auf die Patenterteilung: **08.01.2020**
(21) Anmeldenummer: 18721023.2
(22) Anmeldetag: 25.04.2018
(51) Int. Cl.: B21B 38/02

(54) **VERFAHREN UND VORRICHTUNG ZUM ERMITTELN DER PLANHEIT VON BANDMATERIAL UND BEARBEITUNGSANLAGE MIT EINER SOLCHEN VORRICHTUNG**
METHOD AND DEVICE FOR ASCERTAINING THE FLATNESS OF STRIP MATERIAL, AND MACHINING SYSTEM COMPRISING SUCH A DEVICE
PROCÉDÉ ET DISPOSITIF PERMETTANT DE DÉTERMINER LA PLANÉITÉ D'UN MATÉRIAU EN BANDE ET INSTALLATION DE TRAITEMENT DOTÉE D'UN TEL DISPOSITIF

(30) Priorität: 25.04.2017 DE 102017108786
(43) Veröffentlichungstag der Anmeldung: 29.05.2019
(73) Patentinhaber: Muhr und Bender KG, 57439 Attendorn (DE)
(72) Erfinder: EICHNER, Harald, 53773 Hennef (DE); PRITZ, Stephan, 58239 Schwerte (DE); FELDMANN, Andre, 57462 Olpe (DE); MUNDHENKE, Richard, 57413 Finnentrop (DE)
(74) Vertreter: Neumann Müller Oberwalleney & Partner Patentanwälte
(86) Internationale Anmeldenummer: PCT/EP2018/060633
(87) Internationale Veröffentlichungsnummer: WO 2018/197579

(56) Entgegenhaltungen:
- EP-A2- 0 375 095
- WO-A1-03/002936
- FR-A1- 2 725 512
- US-A1- 2007 193 322

## Beschreibung

Die Erfindung betrifft ein Verfahren und eine Vorrichtung zum Ermitteln der Planheit eines bewegten Bandmaterials. Die Erfindung betrifft ferner ein Verfahren und eine Bearbeitungsanlage zum Bearbeiten von Bandmaterial mit einer solchen Vorrichtung.

Aus der US 2007/193322 A1 ist ein Verfahren zum Ermitteln der Planheit von bewegtem Bandmaterial bekannt, mit den Schritten: Bewegen von Bandmaterial durch eine Bandbearbeitungsvorrichtung und Messen der Ebenheit des bearbeiteten Bandmaterials durch einen Ebenheitsmessbalken.

Aus der WO 03/002936 A1 ist eine Vorrichtung zum Überwachen von Dickenschwankungen eines Objekts mit einer ersten und einer zweiten gegenüberliegenden Oberflächen bekannt. Die Vorrichtung umfasst eine erste Quelle, die ein erstes Interferenzmusters auf der ersten Oberfläche projiziert, und eine zweite Quelle, die ein zweites Interferenzmusters auf der zweiten Oberfläche projiziert. Die Vorrichtung umfasst ferner einen ersten Detektor, der das erste Interferenzmuster erfasst, einen zweiten Detektor, der das zweite Interferenzmuster erfasst. Der erste Detektor und der zweite Detektor erzeugen jeweils auf Basis der erfassten Interferenzmuster ein Signal. Ein Prozessor berechnet die Variation der Dicke des Objekts anhand des ersten und des zweiten Signals.

Aus der US 2003/0011789 A1 sind ein Apparat und Verfahren zur optischen Überwachung der Dickenänderungen eines Objekts. Das Objekt hat zwei entgegengesetzte Oberflächen und ist in einer Ausführungsform ein Plattenmaterial (sheet material). Der Apparat umfasst eine erste Projektionsquelle, um ein erstes Streifenmuster (fringe pattern) auf die erste Oberfläche zu projizieren, und eine zweite Projektionsquelle, um ein zweites Streifenmuster auf die zweite Oberfläche zu projizieren. Die Streifen der Streifenmuster sind parallel zur Bewegungsrichtung des Plattenmaterials. In einer anderen Ausführungsform ist das Objekt in Form eines Wafers oder einer CD gestaltet, die in einem drehbaren Futter aufgenommen werden kann. Die Streifen werden auf den Wafer senkrecht zu einem Durchmesser des Wafers projiziert.

Aus der DE 102 05 132 A1, welche den Oberbegriff der Ansprüche 1 und 12 bildet, sind ein Verfahren und eine Vorrichtung zum optischen Messen der Oberflächenform von bewegten Bändern in Walz- und Weiterbearbeitungsanlagen bekannt. Mittels eines Projektors werden quer zum Band verlaufende Messlinien auf der Bandoberfläche erzeugt. Die Messlinien und damit deren durch Unebenheiten veränderter Verlauf werden mit einer CCD-Kamera (Charged-Coupled-Device) erfasst. Das Messbild wird nach der Erfassung rechnerisch mit einem zuvor aufgenommenen Referenzmuster verglichen.

Aus der EP 0 864 847 A2 ist ein Verfahren zum Messen der Planheit von Metallband bekannt, bei dem mit einem Projektor ein Linienmuster auf einer Bandoberfläche erzeugt und direkt von einer Kamera erfasst wird. Als Kamera wird eine CCD-Kamera verwendet, die so angeordnet ist, dass sich ein Winkel zwischen der Lichtquelle der Oberfläche und der Kamera ergibt. Die Messanordnung ist an einem Messhaus vor dem Haspel angeordnet, wobei sich die Kamera auf der dem Haspel abgewandten Messhausseite und der Projektor auf der dem Haspel zugewandten Messhausseite über dem Metallband angeordnet sind. Mit dem Verfahren kann die Bandplanheit von Warmbandstraßen mit üblichen Fertigungsgeschwindigkeiten von bis 25 Metern pro Sekunde gemessen werden.

Aus der DE 199 32 324 A1 ist ein Verfahren zur Ermittlung der Planheit beziehungsweise der Welligkeit eines bewegten Bandes bekannt. Hierfür wird punkt- oder linienweise die Lage einer Oberfläche des Bandes im Raum ermittelt und an diese Oberfläche eine virtuelle Auflagefläche anmodelliert und dann die Welligkeit aus den Abweichungen der Oberfläche von der Auflagefläche ermittelt. Zur Messung der Bandoberfläche sind oberhalb des sich bewegenden Bandes in einer gemeinsamen Bezugsebene mehrere Abstandsmesser angeordnet. Die Abstandsmesser befinden sich entlang der Breite des Bandes quer zur Bewegungsrichtung parallel nebeneinander. Sie messen die Lage der Oberfläche entlang jeweils einer parallel zur Bewegungsrichtung verlaufenden Schnittebene. Es werden laseroptische Sensoren verwendet, die auf Basis der Triangulation arbeiten. Die Transportgeschwindigkeit des Bandes liegt unter einem Meter pro Sekunde.

Der Anwendungsbereich der beschriebenen Verfahren ist durch die maximal möglichen Bandzüge begrenzt. Die bekannten Verfahren lassen sich nur bei geringen spezifischen Bandzügen einsetzen, wie beispielsweise Richtanlagen. Für Anlagen, in denen höhere Bandzüge benötigt werden, wie beispielsweise Walzanlagen, sind sie nicht geeignet. Ferner ist durch die Lichtprojektion auf das Bandmaterial eine gewisse Abhängigkeit zur Umgebungsbeleuchtung gegeben, welche die Reflektion beeinflussen und zu Messungenauigkeiten führen kann.

Hiervon ausgehend ist es eine Aufgabe der vorliegenden Erfindung, ein Verfahren und eine Vorrichtung zum Ermitteln der Planheit von bewegtem Bandmaterial vorzuschlagen, das auch für hohe Bandzüge geeignet ist und eine hohe Ermittlungsgenauigkeit aufweist. Die Aufgabe besteht weiter darin, ein Verfahren zur Bearbeitung eines Bandmaterials vorzuschlagen, dass mithilfe eines solchen Verfahrens durchgeführt wird, um verbesserte Bearbeitungsergebnisse hinsichtlich der Planheit des Bandmaterials zu erzielen. Ferner soll eine entsprechende Vorrichtung vorgeschlagen werden, die für die Bearbeitung von Bandmaterial mit hohen spezifischen Zugkräften geeignet ist.

Eine Lösung besteht in einem Verfahren zum Ermitteln der Planheit von bewegtem Bandmaterial, mit den Schritten: Bewegen des Bandmaterials, wobei auf das Bandmaterial eine Zugkraft von mindestens 20 N/mm² einwirkt; Erzeugen zumindest eines Projektionsmusters auf der Oberfläche des Bandmaterials mittels einer projektionsgebenden Optik, wobei das Projektionsmuster von einer relativ zur Mittelebene des Bandmaterials seitlich versetzten Position auf die Oberfläche des Bandmaterials projiziert wird, derart, dass ein zwischen der Oberfläche des Bandmaterials und einem Projektionsstrahl gebildeter Projektionswinkel zwischen 1° und 45° beträgt; und Erfassen des Projektionsmusters mittels einer Kamera, wobei die Kamera in einer Querebene zur Bewegungsrichtung betrachtet oberhalb des Bandmaterials angeordnet wird. Das zumindest eine Projektionsmuster wird in Form eines Projektionsgitters auf die Oberfläche des Bandmaterials projiziert werden.

Ein Vorteil des Verfahrens ist, dass es auch bei Bearbeitungsprozessen mit hohen Bandzügen eine hohe Ermittlungsgenauigkeit aufweist. Durch den kleinen Projektionswinkel und den seitlichen Einfall des Projektionsmusters auf die Oberfläche des Bandmaterials werden selbst die aufgrund der hohen Zugkräfte entsprechend nur geringfügigen Abweichungen von einem Soll-Referenzmuster erkennbar, so dass entsprechend gegengesteuert werden kann. Außerdem ist der ungewünschte Einfluss von Reflektionen dadurch, dass das Projektionsmuster schräg auf das Bandmaterial projiziert wird, reduziert, so dass das Ermittlungsergebnis verbessert ist. Hinsichtlich des zwischen dem Projektionsstrahl und der Oberfläche des Bandmaterials gebildeten Projektionswinkels soll unter Projektionsstrahl begrifflich insbesondere ein von der projektionsgebenden Optik erzeugter Zentralstrahl beziehungsweise ein Strahl durch den geometrischen Mittelpunkt des erzeugten Projektionsmusters mit umfasst sein.

Als Bandmaterial kann insbesondere ein Band aus metallischem Werkstoff verwendet werden. Hiermit sind insbesondere Werkstoffe gemeint, die zumindest ein metallisches Element beziehungsweise eine Legierung aus metallischen Elementen beinhalten. In der industriellen Fertigung wird häufig Bandmaterial aus Stahl beziehungsweise aus einer Stahllegierung verwendet, wobei auch Bandmaterial aus anderen Metallen, wie Aluminium beziehungsweise Aluminiumlegierungen eingesetzt werden. Es kann Warmband oder Kaltband verwendet werden, wobei diese Begriffe im Sinne der Fachsprache für unterschiedliche Bandbreitenbereiche zu verstehen sind. Unter Warmband wird ein Walzstahlfertigerzeugnis (Stahlband) verstanden, das durch Walzen nach vorherigem Erwärmen erzeugt wird. Mit Kaltband ist ein kaltgewalztes Stahlband (Flachstahl) gemeint. Als kaltgewalzt wird Flachstahl bezeichnet, dessen letzte Dickenabnahme durch Walzen ohne vorhergehendes Erwärmen erfolgt. Vorzugsweise wird das Projektionsmuster nur auf eine Seite des Bandmaterials projiziert, insbesondere auf die nach oben gerichtete Seite.

Das Verfahren eignet sich für die Verwendung in bandverarbeitenden Industrieanlagen, bei denen hohe Bandzüge auftreten, wie Walz- oder Schneidanlagen. In Konkretisierung kann das Verfahren auch für Prozesse verwendet werden, bei denen auf das Bandmaterial Zugkräfte von mehr als 40 N/mm², insbesondere von mehr als 60 N/mm², gegebenenfalls von mehr als 100 N/mm² einwirken. Die Zugkräfte können zwischen zwei oder mehr in entgegengesetzten Richtungen auf das Bandmaterial einwirkenden Komponenten erzeugt werden. Beispielsweise können Hauptzugkräfte mittels einer endseitigen Haspel in das Bandmaterial eingeleitet werden, auf die das Bandmaterial am Ende des Prozesses aufgewickelt wird. Alternativ oder in Ergänzung können Zugkräfte auch mittels anderer Komponenten, wie beispielsweise einer Bandvorschubeinrichtung beziehungsweise Antriebsrollen auf das Bandmaterial übertragen werden. Entgegen der Vorschubbewegung des Bandmaterials wirkende Gegenzugkräfte können beispielsweise von einer Bearbeitungsanlage, beispielsweise einer Walzanlage, und/oder anderen Komponenten wie einer Bandvorschubeinrichtung, Antriebsrollen und/oder einer Haspel erzeugt werden.

Das Bandmaterial kann beispielsweise mit einer Vorschubbewegung von mindestens 15 m/min, insbesondere mindestens 50 m/min bewegt werden. Alternativ oder in Ergänzung kann das Bandmaterial mit einer Vorschubbewegung von höchstens 600 m/min, insbesondere von höchstens 120 m/min, gegebenenfalls höchstens 85 m/min bewegt werden. Es versteht sich, dass andere als die hier genannten Geschwindigkeiten möglich sind. Insgesamt wird mit dem vorliegenden Verfahren ein Bandmaterial mit verbesserter Planlage hergestellt. Der Grad einer möglichen Unplanheit lässt sich schnell und gut erkennen, so dass hierauf entsprechend schnell reagiert und gegebenenfalls im Bearbeitungsprozess des Bandmaterials gegengesteuert werden kann.

Das Ermitteln beziehungsweise Prüfen der Planheit kann beliebig erfolgen, beispielsweise durch optische Wahrnehmung durch einen Bediener der Vorrichtung oder automatisiert mittels einer Datenverarbeitungseinrichtung, die ein von der Kamera erfasstes Projektionsmuster mit einem vorgegebenen Referenz- beziehungsweise Sollprojektionsmuster vergleichen kann.

Je nach verwendeter projektionsgebender Optik soll unter dem Einfallswinkel des Projektionsstrahls im Rahmen der vorliegenden Offenbarung insbesondere ein von der projektionsgebenden Optik erzeugter Zentralstrahl und/oder ein Strahl durch den geometrischen Mittelpunkt des erzeugten Projektionsmusters mit umfasst sein.

Vorzugsweise kann der Einfallswinkel des Projektionsmusters, der im Querschnitt durch das Bandmaterial betrachtet zwischen der Oberfläche des Bandmaterials und einem Projektionsstrahl gebildet ist, zwischen 5° und 25° liegen. Es hat sich überraschend gezeigt, dass sich in diesem Winkelbereich des Projektionsmusters Abweichungen von einem Referenzmuster besonders gut erkennen lassen. Die projektionsgebende Optik ist vorzugsweise seitlich benachbart zum Band angeordnet, das heißt sie liegt außerhalb des Arbeitsbereichs des Bandes.

Es können ein oder mehrere Projektionsmuster auf dem Bandmaterial erzeugt werden, was mittels einer oder mehrerer projektionsgebender Optiken erfolgen kann. Soweit vorliegend von einem oder dem Projektionsmuster beziehungsweise projektionsgebender Optik die Rede ist, soll hiermit optional auch stets ein weiteres Projektionsmuster beziehungsweise eine weitere Optik mit umfasst sein, die das jeweilige Merkmal aufweisen können.

Mit dem vorliegenden Verfahren kann die Planheit des Bandmaterials in Vorschubrichtung des Bandmaterials in einem relativ kurzen Abschnitt ermittelt werden. Vorzugsweise wird das Projektionsmuster über eine Längserstreckung von weniger als 100 cm, insbesondere weniger als 80 cm, vorzugsweise weniger als 40 cm, auf die Oberfläche projiziert. Alternativ oder in Ergänzung wird das Projektionsmuster über eine Längserstreckung von vorzugsweise insgesamt mehr als 7 cm, insbesondere mehr als 10 cm, gegebenenfalls auch mehr als 20 cm, auf die Oberfläche projiziert. Auf diese Weise können auch kleinere Planheitsabweichungen in Längsrichtung gut erkannt werden. In Querrichtung erfolgt die Projektion vorzugsweise über die gesamte Breite des Bandes. Sofern im Rahmen der vorliegenden Offenbarung Längen angegeben sind, können sich diese auf eine kleinste, mittlere oder größte Länge des Projektionsmusters beziehen.

Unabhängig von der Anzahl der Optiken erstreckt sich die erzeugte zumindest eine Projektion vorzugsweise über die gesamte Breite des Bandes, um eine Planlageabweichung entsprechend auch in allen Breitenbereichen, das heißt in den Randbereichen und einem mittleren Bereich des Bandes, zu erfassen. Bei Verwendung mehrerer Optiken beziehungsweise mehrerer Projektionsmuster ist insbesondere vorgesehen, dass diese relativ zueinander versetzt auf dem Bandmaterial erzeugt werden, wobei teilweise Überschneidungen der verschiedenen Projektionsmuster möglich sind. Die Projektionsmuster können in Vorschubrichtung des Bandmaterials hintereinander auf das Bandmaterial projiziert werden. Alternativ oder in Ergänzung können die Projektionsmuster auch in Querrichtung des Bandes versetzt zueinander auf die Oberfläche projiziert werden. Dabei werden die Projektionsmuster insbesondere auf aneinander angrenzende Bereiche des Bandmaterials projiziert, wobei benachbarte Projektionsmuster vorzugsweise einen gemeinsamen Überdeckungsbereich haben, um eine möglichst genaue Ermittlung der Planheit auch in diesem Bereich zu gewährleisten. Beispielsweise kann ein erstes Projektionsmuster von einer ersten Bandseite auf einen ersten Bandbereich projiziert werden, während ein zweites Projektionsmuster von der gegenüberliegenden zweiten Bandseite auf einen zweiten Bandbereich projiziert werden kann, wobei die beiden Bandbereiche in Querrichtung zum Band zumindest aneinander angrenzen beziehungsweise in einem Überschneidungsbereich nahtlos ineinander übergehen. Auf diese Weise kann die Planheit über die gesamte Breite des Bandes gemessen werden.

Das Projektionsmuster kann prinzipiell beliebig gestaltet sein und beispielsweise Linien oder andere geometrische Strukturen, wie Rauten oder Kreise umfassen. Eine besonders gute und einfache Ermittlung der Planheit wird erreicht, wenn das beziehungsweise die Projektionsmuster in Form eines Projektionsrasters auf die Oberfläche projiziert werden. Das Projektionsgitter kann vorzugsweise Linien umfassen, die in zwei Richtungen auf das Band projiziert werden, welche sich immer unter einem definierten Winkel kreuzen. In einer möglichen Konkretisierung können die Linien zumindest im Wesentlichen in Längsrichtung und in Querrichtung verlaufen, wobei sich die Linien in diesem Fall im Wesentlichen senkrecht kreuzen. Mit der Formulierung "im Wesentlichen" sollen Winkelabweichungen von bis zu plus minus 5° von der Längsbeziehungsweise Querrichtung und sich hieraus ergebende Winkelabweichungen der Kreuzungswinkel mit umfasst sein. Es sind auch Projektionsgitter aus Rauten, sich kreuzenden Diagonallinien oder Rechtecken möglich, wobei sich die Linien senkrecht oder unter spitzen Winkeln kreuzen können. Vorzugsweise wird das zumindest eine Projektionsmuster rasterartig erzeugt, wobei ein Rastermaß zwischen sich wiederholenden Rasterpunkten zwischen 0,7 mm und 100 mm liegen kann. Die Mindestabstände der Rasterpunkte können insbesondere auch mindestens 1,0 mm, 3,0 mm, 5,0 mm oder 10 mm betragen. Die maximalen Abstände der Rasterpunkte können insbesondere auch bis zu 70 mm, 50 mm oder 30 mm betragen. Es versteht sich, dass die beispielhaft angegebenen Mindest- und Maximalwerte von der Gestalt des Rasters abhängen und beliebig miteinander kombiniert werden können. Durch geeignete Wahl des Rastermaßes werden der Grad und die Position einer möglichen Unplanheit gut erkennbar. Durch das verwendete Projektionsmuster ist es möglich, Planheitsveränderungen genau zu lokalisieren und deren Ausprägung genau zu bestimmen.

Es sind Raster mit gleichen und unterschiedlichen Abständen zwischen einander kreuzenden Linienscharen möglich. So können die Abstände einer ersten Schar von Linien untereinander mindestens 0,7 mm, insbesondere mindestens 1,0 mm, betragen, während die Abstände einer zweiten Schar von Linien, welche die ersten Linien kreuzen, größer sein können, beispielsweise größer als 2,0 mm. Die gesamte Projektionsfläche kann über der Breite des Bandes eine konstante oder variable Länge haben. Eine variable Länge der Projektionsfläche über der Breite des Bandes kann beispielsweise durch Verzerrungen der Optik herrühren. In diesem Fall kann sich eine etwa trapezförmige Projektionsfläche ergeben, bei der das durch die sich kreuzenden Linien gebildete Rastermaß auf der einen Seite des Bandes kleiner ist, als auf der gegenüberliegenden Seite. Sofern im Rahmen der vorliegenden Offenbarung Rastermaße angegeben sind, können sich diese auf ein mittleres Rastermaß der Gesamtprojektionsfläche, ein kleinstes Rastermaß der kleinsten Raster der Projektionsfläche oder ein größtes Rastermaß der größten Raster der Projektionsfläche beziehen.

Die Lösung besteht weiter in einem Verfahren zum Bearbeiten von Bandmaterial mit den Schritten: Transportieren des Bandmaterials unter Aufbringung einer Zugkraft auf das Bandmaterial von mindestens 20 N/mm², insbesondere mindestens 40 N/mm²; Bearbeiten des Bandmaterials mittels einer Bearbeitungsvorrichtung; Ermitteln der Planheit des Bandmaterials mit dem oben genannten Verfahren; Vergleichen eines mittels der Kamera erfassten Projektionsmusters des Bandmaterials mit einem Referenzmuster und Ermittlung eines Vergleichswerts zwischen dem erfassten Projektionsmuster und dem Referenzmuster; und Regeln eines die Planheit des Bandmaterials beeinflussenden Parameters der mechanischen Bearbeitung auf Basis des ermittelten Vergleichswerts.

Es ist insbesondere vorgesehen, dass das Ermitteln und Vergleichen des Projektionsmusters fortlaufend erfolgt, damit schnellstmöglich auf mögliche Planabweichungen reagiert werden kann. Als Bearbeitungsverfahren kommen alle Verfahren in Frage, mit denen Bandmaterial bearbeitet beziehungsweise gehandhabt werden kann. Insbesondere kann das Bearbeitungsverfahren ein Walz- Richt- und/oder Umwickelverfahren umfassen. Das Walzverfahren kann beispielsweise ein reduzierendes Walzen mit einheitlicher Blechdicke, ein Flexibles Walzen zur Erzeugung von Bandmaterial mit variabler Blechdicke oder ein Dressierwalzen sein. Die mit dem oben beschriebenen Ermittlungsverfahren visualisierte Planlage des Bandes kann während des Walzens mittels einer Datenverarbeitungseinrichtung über die hinterlegten Vergleichsmuster messtechnisch bewertet und regelungstechnisch beeinflusst werden.

Die Lösung der oben genannten Aufgabe kann weiter in einer entsprechenden Vorrichtung zum Ermitteln der Planheit von bewegtem Bandmaterial liegen, umfassend: zumindest eine projektionsgebende Optik zum Erzeugen eines Projektionsmusters auf der Oberfläche des Bandmaterials, wobei die projektionsgebende Optik derart quer zum Bandmaterial angeordnet und ausgerichtet ist, dass ein von der projektionsgebenden Optik erzeugtes Projektionsmuster unter einem Projektionswinkel von zwischen 1 ° und 45° auf die Oberfläche projiziert wird; und zumindest eine Kamera zum Erfassen des zumindest einen Projektionsmusters, wobei die Kamera in einer Querebene zur Bewegungsrichtung betrachtet vertikal oberhalb des Bandmaterials angeordnet ist.

Mit der genannten Vorrichtung werden dieselben Vorteile erreicht, wie mit dem oben beschriebenen Verfahren. Es versteht sich, dass die Vorrichtung und das Verfahren zusammenwirken, so dass alle vorrichtungsspezifischen Merkmale auf das Verfahren übertragbar sind, und umgekehrt, alle verfahrensspezifischen Merkmale auf die Vorrichtung. Mit der Vorrichtung kann die Planheit des Bandmaterials mit hoher Genauigkeit ermittelt beziehungsweise geprüft werden.

Es können eine oder mehrere projektionsgebende Optiken verwendet werden. Bei Verwendung mehrerer Optiken können diese auf derselben Seite des Bandes in Vorschubrichtung versetzt zueinander angeordnet sein. Alternativ oder in Ergänzung können die Optiken auch auf entgegengesetzten Seiten des Bandmaterials angeordnet sein. Die Optiken sind vorzugsweise seitlich neben dem Band angeordnet, das heißt außerhalb der Breitenerstreckung beziehungsweise des Arbeitsbereichs des Bandes.

Als projektionsgebende Optik kann eine Lichtquelle, insbesondere eine Laserlichtquelle oder eine LED-Lichtquelle, oder eine Licht reflektierende Optik, insbesondere ein Spiegel, verwendet werden. Die Verwendung einer reflektierenden Optik, von der aus das Projektionsmuster auf das Band projiziert wird, hat den Vorteil, dass die eigentliche Lichtquelle weiter entfernt angeordnet werden kann, und damit weniger stark von Umwelteinflüssen im Bereich des Bandes beeinflusst ist. Bei Verwendung eines Lasers kann der von dem Laser erzeugte Zentralstrahl als den Projektionswinkel definierenden Projektionsstrahl herangezogen werden. Bei Verwendung einer LED-Lichtquelle kann ein Strahl durch den geometrischen Mittelpunkt der erzeugten Projektionsfläche zur Definition des Projektionswinkels herangezogen werden.

Eine zur Lösung der oben genannten Aufgabe vorgeschlagene erfindungsgemäße Bearbeitungsanlage zum Bearbeiten von Bandmaterial kann folgendes umfassen: eine Bearbeitungsvorrichtung zum Bearbeiten des Bandmaterials; eine der Bearbeitungsvorrichtung nachgelagerte Vorrichtung zum Ermitteln der Planheit des Bandmaterials nach einer der oben beschriebenen Ausgestaltungen; und eine der Vorrichtung zum Ermitteln der Planheit nachgelagerte Bandvorschubeinrichtung, wobei die Bandvorschubeinrichtung derart gestaltet ist, dass auf das Bandmaterial Zugkräfte von mindestens 20 N/mm², insbesondere mindestens 40 N/mm², ausübbar sind. Die projektionsgebende Optik ist vorzugsweise ausgestaltet, um ein Projektionsmuster in Form eines Projektionsgitters auf die Oberfläche des Bandmaterials zu projizieren.

Nach einer möglichen Ausführungsform kann die Bearbeitungsanlage eine Walzan-lage zum Walzen von metallischem Bandmaterial, insbesondere eine Anlage zum Flexiblen Walzen sein. Beim Flexiblen Walzen wird Bandmaterial mit im Wesentlichen einheitlicher Blechdicke durch Verändern des Walzspalts während des Prozesses zu Bandmaterial mit variabler Blechdicke über der Länge ausgewalzt. Die durch das Flexible Walzen erzeugten Abschnitte unterschiedlicher Dicke erstrecken sich quer zur Längsrichtung beziehungsweise zur Walzrichtung des Bandmaterials. Das Bandmaterial kann nach dem Flexiblen Walzen wieder zum Coil aufgewickelt werden und an anderer Stelle der Weiterverarbeitung zugeführt werden, oder es kann direkt weiterverarbeitet werden, beispielsweise durch Ablängen des Bandmaterials zu einzelnen Blechelementen. Es sind auch andere Walzprozesse denkbar, wie einfaches reduzierendes Walzen auf einheitliche Blechdicke oder Dressierwalzen.

Die Bandvorschubeinrichtung kann beliebige Mittel umfassen, die geeignet sind eine Zugkraft auf das Bandmaterial aufzubringen, um dieses in Vorschubrichtung durch die Bearbeitungsanlage zu transportieren. Es können eine oder mehrere Komponenten vorgesehen sein, beispielsweise eine Haspel und/oder Antriebsrollen, welche Zugkräfte auf das Bandmaterial aufbringen. Es können weitere Komponenten vorgesehen sein, um Gegenzugkräfte in das Band in entgegengesetzter Richtung der Bandbewegung einzuleiten, wie beispielsweise eine Bearbeitungsvorrichtung, Antriebsrollen und/oder eine Haspel.

Nach einer Ausführungsform sind die Kamera und die projektionsgebende Optik an separaten Halterungen der Vorrichtung beziehungsweise der Anlage befestigt. Die Kamera ist vorzugsweise an einem Träger gelagert, der von der eigentlichen Bearbeitungsvorrichtung schwingungsentkoppelt ist. Zur Entkopplung von Schwindungen zwischen der Bearbeitungsanlage und der Kamera können elastische Elemente vorgesehen sein. Die projektionsgebende Optik kann an einem Gestell der Bearbeitungsvorrichtung angebracht sein.

Bevorzugte Ausführungsbeispiele werden nachstehend anhand der Zeichnungsfiguren erläutert. Es zeigt:
- Figur 1: schematisch eine erfindungsgemäße Vorrichtung in einer ersten Ausführungsform in perspektivischer Darstellung;
- Figur 2: die Vorrichtung aus Figur 1 im Querschnitt durch das Bandmaterial;
- Figur 3: die Vorrichtung aus Figur 1 in Draufsicht auf das Bandmaterial;
- Figur 4: beispielhaft ein Projektionsmuster mit Abweichung von der Planlage in einem Seitenbereich des Bandes;
- Figur 5: schematisch eine erfindungsgemäße Vorrichtung in einer zweiten Ausführungsform in perspektivischer Darstellung;
- Figur 6: die Vorrichtung aus Figur 5 im Querschnitt durch das Bandmaterial;
- Figur 7: die Vorrichtung aus Figur 5 in Draufsicht auf das Bandmaterial;
- Figur 8: eine Vorrichtung in Draufsicht auf das Bandmaterial in einer weiteren abgewandelten Ausführungsform;
- Figur 9: eine Vorrichtung in Draufsicht auf das Bandmaterial in einer weiteren abgewandelten Ausführungsform;
- Figur 10: eine erfindungsgemäße Bearbeitungsanlage mit einer erfindungsgemäßen Vorrichtung;
- Figur 11: ein Abschnitt des Bandmaterials aus Figur 10 in Draufsicht; und
- Figur 12: den Abschnitt des Bandmaterials aus Figur 11 in Seitenansicht.

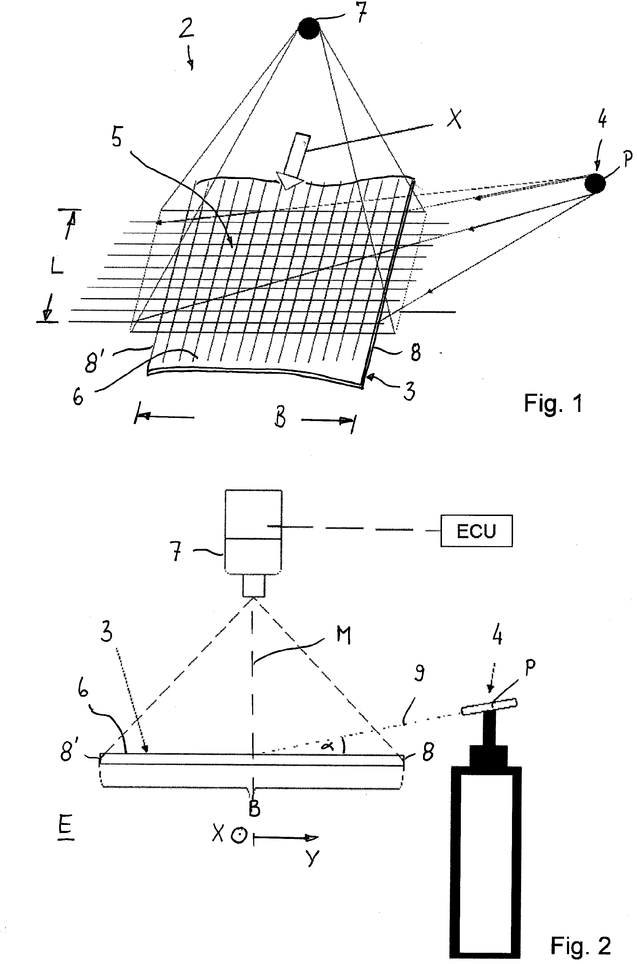

Die Figuren 1 bis 4, welche nachstehend gemeinsam beschrieben werden, zeigen eine erfindungsgemäße Vorrichtung 2 zum Ermitteln der Planheit von bewegtem Bandmaterial 3 in einer ersten Ausführungsform. Die Vorrichtung 2 umfasst eine projektionsgebende Optik 4 zum Erzeugen eines Projektionsmusters 5 auf der Oberfläche 6 des Bandmaterials 3 und eine Kamera 7 zum Erfassen des Projektionsmusters 5. Als Bandmaterial 3 kann ein metallischer Werkstoff verwendet werden, beispielsweise aus ein Stahl- oder Aluminiumwerkstoff, ohne hierauf eingeschränkt zu sein. Es kann Bandmaterial mit allen technisch möglichen Bandbreiten B und Banddicken D verwendet werden.

Die Kamera 7 erfasst die Planheit des Bandmaterials während der Bandvorschubbewegung in Vorschubrichtung X, die auch als Längsrichtung bezeichnet werden kann. Es ist insbesondere in Figur 2 erkennbar, dass die Optik 4 quer zum Bandmaterial 3 versetzt angeordnet ist, und zwar insbesondere so, dass sie zu einer Kante 8 des Bandes einen Abstand aufweist. Die projektionsgebende Optik 4 ist derart ausgerichtet, dass das erzeugte Projektionsmuster 5 unter einem mittleren Projektionswinkel a auf die Oberfläche 6 trifft, welcher insbesondere zwischen 1 ° und 45° liegt. Vorzugsweise ist der Projektionswinkel a größer gleich 5° und/oder kleiner gleich 35°. Die Kamera 7 und die projektionsgebende Optik 4 sind an separaten Halterungen befestigt. Für eine hohe Erfassungsgenauigkeit kann die Kamera 7 schwingungsentkoppelt an einem Träger gelagert sein, insbesondere mittels eines elastischen Elements. Die projektionsgebende Optik 4 ist an einem separaten Gestell angebracht, das Teil einer Bearbeitungsvorrichtung sein kann.

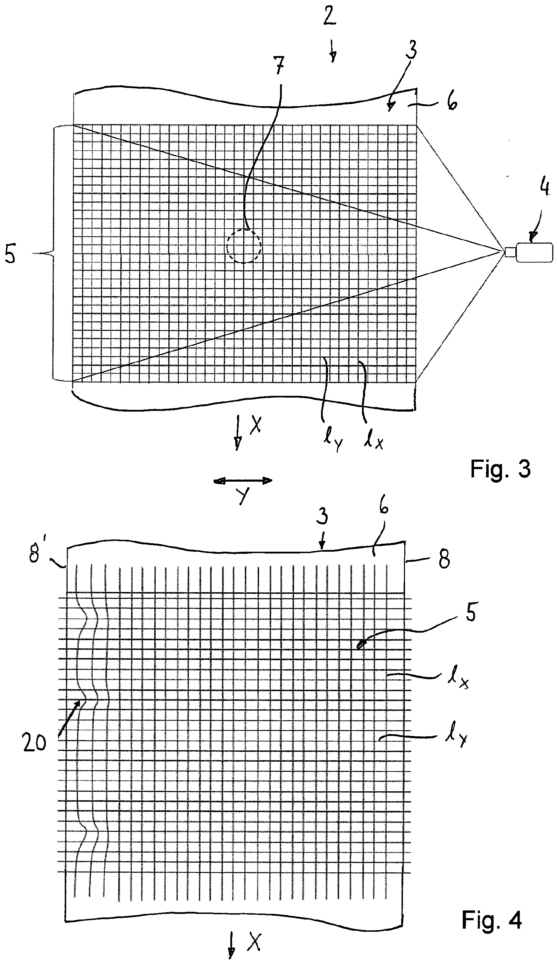

Das Projektionsmuster 5 erstreckt sich, wie insbesondere in den Figuren 1 und 3 erkennbar, über die gesamte Breite B des Bandes 3, um eine Planlageabweichung entsprechend auch in allen Breitenbereichen, das heißt in den Randbereichen und im mittleren Bereich des Bandes, zu erfassen. In Vorschubrichtung X des Bandes 3 erstreckt sich das Projektionsmuster 5 über eine Länge L von vorzugsweise weniger als 100 cm, insbesondere weniger als 80 cm, besonders bevorzugt weniger als 40 cm. Insgesamt wird damit nur eine verhältnismäßig geringe Einbaulänge der Vorrichtung 2 in Vorschubrichtung des Bandmaterials 3 benötigt, so dass eine mit der Vorrichtung ausgestattete Bearbeitungsanlage entsprechend kurz baut. Vorzugsweise erstreckt sich das Projektionsmuster 5 in Bewegungsrichtung X des Bandmaterials 3 über eine Länge L von mindestens 7 cm, insbesondere mindestens 10 cm, gegebenenfalls auch mindestens 20 cm. Vorzugsweise wird das Projektionsmuster nur auf eine Seite des Bandmaterials 3 projiziert.

Das Projektionsmuster 5 wird vorliegend in Form eines rasterförmigen Projektionsgitters auf die Oberfläche 6 projiziert. Wie insbesondere in Figur 3 erkennbar, umfasst das Projektionsgitter jeweils eine Schar von in Längsrichtung X und in Querrichtung Y verlaufenden Linien ℓx, ℓy, die sich senkrecht schneiden. Es versteht sich, dass das Projektionsgitter auch Linien umfassen kann, die sich unter einem spitzen beziehungsweise stumpfen Winkel schneiden können. Ebenfalls ist es möglich, dass sich das Projektionsmuster über der Breite des Bandes erweitert, insbesondere trapezförmig gestaltet ist. Das Rastermaß zwischen sich wiederholenden Rasterpunkten, das heißt zwischen den Schnittpunkten der sich schneidenden Linien ℓx, ℓy, liegt zwischen 0,7 mm und 100 mm, insbesondere zwischen 1,0 mm und 50 mm, gegebenenfalls auch zwischen 10 mm und 30 mm. Die genannten Rastermaße beziehen sich insbesondere auf ein mittleres Rastermaß des Gesamtprojektionsgitters. Es versteht sich, dass die genannten unteren Werte beliebig mit den genannten oberen Werten kombinierbar sind. Durch geeignete Wahl des Rastermaßes werden der Grad und die Position einer möglichen Unplanheit gut sichtbar. Es versteht sich jedoch, dass das Projektionsmuster auch andere Formen als eine gitterartige Struktur aufweisen kann, beispielsweise eine rautenförmige, rechteckige oder Kreise umfassende Struktur. Auch können die Abstände der Linien der ersten Schar untereinander, und die Abstände der Linien der kreuzenden zweiten Schar unterschiedlich sein. Bei sich senkrecht kreuzenden Linien würde sich hiermit ein Rechteckmuster ergeben.

Die Kamera 7 ist im Querschnitt durch die Anordnung betrachtet zumindest etwa mittig oberhalb des Bandes 3 angeordnet. Mit zumindest etwa mittig sollen alle Positionen innerhalb eines mittleren Drittels des Bandes 3 mit umfasst sein. Durch die mittige Anordnung kann das von der Optik 4 erzeugte Projektionsmuster 5 von der Kamera 7 besonders gut erfasst werden. Die Kamera 7 und die Optik 4 sind in einer Ebene E angeordnet, welche in Figur 2 der Zeichenebene entspricht.

Als projektionsgebende Optik 4 wird vorliegende eine Lichtquelle in Form eines Lasers verwendet, wobei andere Lichtquellen oder bildgebende Optiken ebenso möglich sind. Insbesondere kann auch eine Licht reflektierende Optik wie beispielsweise ein Spiegel verwendet werden, welche einen von einer hierzu entfernt angeordneten Lichtquelle erzeugten Lichtstrahl auf das Bandmaterial umlenkt beziehungsweise reflektiert.

Ein erfindungsgemäßes Verfahren kann wie folgt durchgeführt werden: Während das Bandmaterial 3 mittels einer hier nicht gesondert gezeigten Bandvorschubeinrichtung in Vorschubrichtung X bewegt wird, wird das Projektionsmuster 5 auf der Oberfläche 6 des Bandmaterials 3 erzeugt. Dabei wird das Projektionsmuster 5, wie oben beschrieben von einer seitlichen Position quer zur Vorschubrichtung X projiziert, wobei der Projektionswinkel a in einer Querschnittsebene E, welche die Optik 4 beinhaltet, zwischen 1° und 45° beträgt. Das auf der Oberfläche 6 erzeugte Projektionsmuster 5 wird fortlaufend erfasst und kann anschließend mit einem das Soll-Bandprofil entsprechenden Referenzmuster verglichen werden.

In Figur 4 ist eine Unregelmäßigkeit 20 des ermittelten Projektionsmuster 5 von der Soll-Planheit beispielhaft dargestellt. Konkret ist im linken Bandbereich eine Welligkeit erkennbar, welche eine Abweichung von der eigentlichen Linienstruktur darstellt. Diese Abweichung von der geraden Gitterstruktur wird entsprechend von der Kamera erfasst und in einer Regeleinheit weiterverarbeitet, um in den Bearbeitungsprozess entsprechend korrigierend einzugreifen.

Das Verfahren beziehungsweise die Vorrichtung 2 eignen sich besonders für die Verwendung in bandverarbeitenden Industrieanlagen, bei denen hohe Bandzüge auftreten, wie Walzanlagen. Insbesondere lassen sich mit der Vorrichtung beziehungsweise dem Verfahren auch Planabweichungen des Bandmaterials erkennen, auf das Zugkräfte von mehr als 20 N/mm², insbesondere mehr als 40 N/mm², insbesondere von mehr als 60 N/mm², gegebenenfalls von mehr als 100 N/mm² einwirken. Das Bandmaterial kann beispielsweise mit einer Vorschubbewegung zwischen 15 m/min und 600 m/min, insbesondere zwischen 50 m/min und 120 m/min bewegt werden, wobei andere Geschwindigkeiten möglich sind.

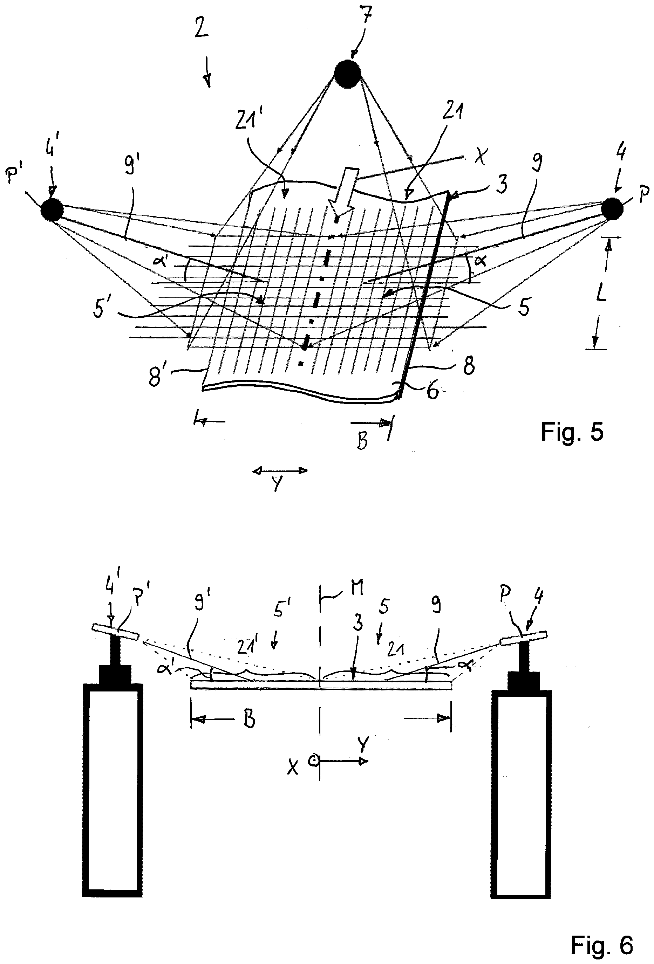

Die Figuren 5 bis 7 zeigen eine erfindungsgemäße Vorrichtung 2 in einer abgewandelten Ausführungsform. Diese entspricht weitestgehend der Ausführungsform gemäß den Figuren 1 bis 3, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 3.

Ein Unterschied zur obigen Ausführungsform besteht darin, dass vorliegend zwei Optiken 4, 4' vorgesehen sind, so dass entsprechend zwei Projektionsmuster 5, 5' auf dem Bandmaterial 3 erzeugt werden. Dabei sind die zwei Optiken 4, 4' bei der Ausführungsform gemäß den Figuren 5 bis 7 in Längs- und Querrichtung versetzt zueinander angeordnet. Dabei sind die beiden Optiken 4, 4' seitlich benachbart zu den beiden entgegengesetzten Rändern 8, 8' des Bandmaterials 3 angeordnet. Die beiden Optiken 4, 4' sind so angeordnet, dass deren erzeugte Projektionsmuster 5, 5' verschiedene, in Querrichtung Y versetzt zueinander angeordnete Bereiche 21, 21' abdecken. Vorzugsweise grenzen die beiden Projektionsflächen 5, 5' etwa in der Mittelebene M aneinander. Das heißt, die rechte Projektionsfläche 5 erstreckt sich vom rechten Rand 8 bis etwa zur Mitte M des Bandes 3, während sich die linke Projektionsfläche 5' vom linken Rand 8' bis etwa zur Mitte M erstreckt. In Längsrichtung des Bandes 3 betrachtet haben die Bereiche 21, 21' eine Überdeckung. Hieraus ergibt sich eine in Längsrichtung kurzbauende Anordnung. Vorliegend sind die beiden Projektionsflächen 5, 5', wie in Figur 5 gezeigt, in Längsrichtung in vollständiger Überschneidung und grenzen aneinander in Querrichtung Y des Bandes an. Es ist möglich, dass die Lichtstärke der von den beiden Optiken 4, 4' erzeugten Projektionsmuster 5, 5' zu den Rändern hin abnimmt. Für diesen Fall ist es günstig, dass die Projektionsmuster 5, 5' so erzeugt werden, dass sie im Übergangsbereich eine insbesondere nahtlose Überdeckung haben, so dass ein auszuwertendes Gesamtprojektionsmuster erzeugt wird.

Die Kamera 7, welche an derselben Stelle angeordnet wie bei der obigen Ausführungsform, erfasst die Projektionsflächen 5, 5' von beiden Optiken 4, 4'. Im Übrigen entspricht die vorliegende Ausführungsform hinsichtlich Aufbau und Funktionsweise derjenigen gemäß den Figuren 1 bis 3, auf deren Beschreibung insofern abkürzend Bezug genommen wird.

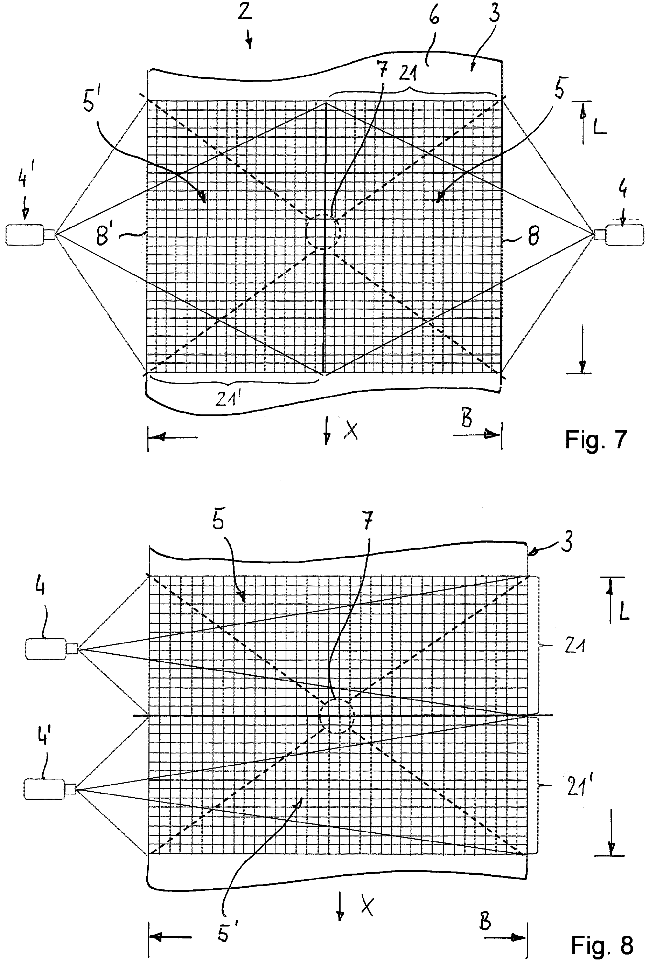

Die Figur 8 zeigt die Projektionsanordnung einer erfindungsgemäßen Vorrichtung 2 in einer weiteren abgewandelten Ausführungsform in Draufsicht auf das Bandmaterial 3. Diese entspricht weitestgehend der Ausführungsform gemäß den Figuren 1 bis 3, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 3.

Ein Unterschied zur obigen Ausführungsform besteht darin, dass vorliegend zwei Optiken 4, 4' vorgesehen sind, so dass entsprechend zwei Projektionsmuster 5, 5' auf dem Bandmaterial 3 erzeugt werden. Dabei sind die zwei Optiken 4, 4' bei der Ausführungsform gemäß Figur 8 in Vorschubrichtung X des Bandmaterials versetzt zueinander angeordnet. Die beiden Optiken 4, 4' sind so angeordnet, dass deren erzeugte Projektionsmuster 5, 5' in Vorschubrichtung des Bandes 3 benachbart zueinander angeordnet sind, beziehungsweise in einem Überschneidungsbereich insbesondere nahtlos ineinander übergehen. Dabei projiziert die stromaufwärts angeordnete Optik 4 ein Projektionsmuster 5 auf den Bandabschnitt 21, während die stromab angeordnete Optik 4' ein Projektionsmuster 5' auf den hieran angrenzenden Bandabschnitt 21' projiziert. In Querrichtung erstrecken sich die beiden Projektionsflächen 5, 5' über die gesamte Breite B des Bandes 3.

Die Kamera 7 (gestrichelt dargestellt), welche an derselben Stelle zentral oberhalb der beleuchteten Bandabschnitte 21, 21' angeordnet ist wie bei der obigen Ausführungsform, erfasst entsprechend die Projektionsmuster 5, 5' von beiden Optiken 4, 4', wobei auch die Verwendung mehrerer Kameras denkbar wäre. Im Übrigen entspricht die vorliegende Ausführungsform hinsichtlich Aufbau und Funktionsweise derjenigen gemäß den Figuren 1 bis 3, beziehungsweise 5 bis 7, auf deren Beschreibung insofern abkürzend Bezug genommen wird.

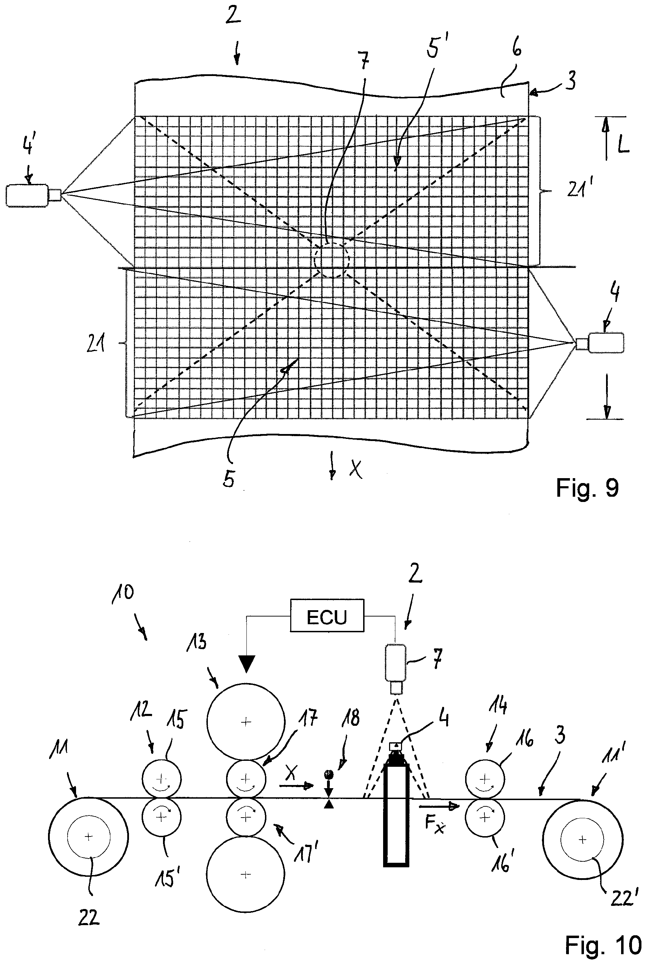

Die Figur 9 zeigt die Projektionsanordnung einer erfindungsgemäßen Vorrichtung 2 in einer weiteren abgewandelten Ausführungsform in Draufsicht auf das Bandmaterial 3. Diese entspricht weitestgehend der Ausführungsform gemäß Figur 8, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen wie in Figur 8, beziehungsweise den vorhergehenden Figuren 1 bis 7. Der einzige Unterschied zur Ausführungsform nach Figur 8 besteht darin, dass die Optiken 4, 4' vorliegend auf einander gegenüberliegenden Seiten des Bandes 3 angeordnet sind. Die rechte Optik 4 beleuchtet das Band 3 von der rechen Seite aus, während die linke Optik 4' das Band 3 von der linken Seite aus beleuchtet. Die Optiken 4, 4' sind in Vorschubrichtung X des Bandmaterials versetzt zueinander angeordnet, wobei die Projektionsmuster 5, 5'aneinander angrenzen, beziehungsweise nahtlos ineinander übergehen. Hierfür können sich die Projektionsmuster 5, 5' in einem Übergangsbereich überschneiden. In Querrichtung erstrecken sich die beiden Projektionsmuster 5, 5' vorzugsweise über die gesamte Breite B des Bandes 3.

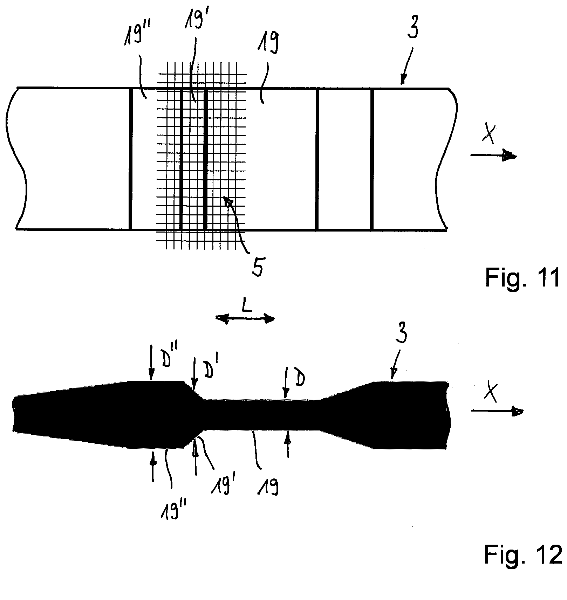

Die Figuren 10 bis 12 werden nachstehend gemeinsam beschrieben. Figur 10 zeigt eine erfindungsgemäße Bearbeitungsanlage 10 zum Bearbeiten von Bandmaterial 3. Die Figuren 11 und 12 zeigen einen Abschnitt des Bandmaterials 3 mit einem beispielhaften Blechdickenverlauf D über der Länge L.

Die Bearbeitung erfolgt im Durchlaufverfahren, das heißt das Bandmaterial 3 wird mittels einer Haspel 22 vom Coil 11 abgewickelt, durchläuft die einzelnen Bearbeitungskomponenten und wird anschließend mittels einer zweiten Haspel 22' wieder zum Coil 11' aufgewickelt. Konkret umfasst die Bearbeitungsanlage 10 in Vorschubrichtung X des Bandes 3 nacheinander eine erste Bandvorschubeinrichtung 12, eine Bearbeitungsvorrichtung 13 zum mechanischen Bearbeiten des Bandmaterials 3, eine erfindungsgemäße Vorrichtung 2 gemäß den Figuren 1 bis 3, sowie eine zweite Bandvorschubeinrichtung 14.

Die beiden Bandvorschubeinrichtungen 12, 14 umfassen jeweils zwei Vorschubrollen 15, 15'; 16, 16' zwischen denen das Band hindurchgeführt wird, die auch als Antriebsrollen bezeichnet werden können. Durch entsprechendes Antreiben der Vorschubrollen wird eine Zugkraft Fx in Vorschubrichtung des Bandes 3 erzeugt, mit der das Band durch die Bearbeitungsvorrichtung 13 gezogen wird. Die Bearbeitungsvorrichtung 13 zum mechanischen Bearbeiten des Bandmaterials 3 ist vorliegend in Form einer Walzvorrichtung zum Flexiblen Walzen gestaltet. Hierfür wird das Bandmaterial 3, das vor dem flexiblen Walzen eine weitestgehend konstante Blechdicke D über der Länge L aufweist, mittels Walzen 17, 17' derart gewalzt, das es längs der Walzrichtung X eine variable Blechdicke erhält. Die Planheit des Bandmaterials kann bei der erfindungsgemäßen Anlage beziehungsweise dem Verfahren während des Walzens unter Einbezug der von der Vorrichtung 2 ermittelten Planheit mittels einer elektronischen Steuereinheit (ECU) gesteuert werden. Die Vorrichtung 2 erfasst laufend die von der Kamera 7 erfassten Projektionsmuster 5, 5', welche nach Abgleich mit dem zugehörigen Referenzmuster als Eingangssignal zur Steuerung der Walzen 17, 17' verwendet werden. Während des Walzens kann ferner die Einstellung der Blechdicke mittels einer weiteren elektronischen Steuereinheit überwacht und gesteuert werden, wobei die von einer Blechdickenmessung 18 ermittelten Daten als ein Eingangssignal zur Einstellung des Walzspalts verwendet werden können. Nach dem flexiblen Walzen hat das Bandmaterial 3 sich jeweils quer zur Walzrichtung erstreckende Abschnitte 19, 19', 19" mit unterschiedlicher Dicke D, D', D". Das Bandmaterial 3 wird nach dem flexiblen Walzen mittels einer Haspel 22' wieder zum Coil 11' aufgewickelt, so dass es dem nächsten Bearbeitungsprozess zugeführt werden kann.

Zum Walzen von Bandmaterial, insbesondere beim Flexiblen Walzen, sind hohe Zugkräfte Fx erforderlich, um das Band 3 durch die Walzvorrichtung 13 zu ziehen. Diese Zugkräfte werden vorliegend im Wesentlichen von der Haspel 22' erzeugt, wobei auf das Bandmaterial 3 in den zwischen der endseitigen Haspel 22' und der Walzvorrichtung 13 liegenden Abschnitten Zugkräfte von mehr als 100 N/mm², gegebenenfalls auch von mehr als 120 N/mm², anliegen können. Die hohen Zugkräfte führen zu einem Glattziehen des Bandmaterials 3, so dass Abweichungen der Oberfläche von der Planlage nur schwer erkennbar sind. Hierfür eignet sich das erfindungsgemäße Verfahren beziehungsweise Vorrichtung 2 jedoch besonders gut, da hiermit auch nur kleine Abweichungen von dem Referenzmuster gut ermittelt werden können.

Das Messen und Vergleichen des Projektionsmusters 5, 5' erfolgt fortlaufend während des Walzprozesses. Durch die Anordnung der Vorrichtung 2 unmittelbar hinter den Walzen 17, 17' kann schnell auf mögliche Planabweichungen reagiert werden. Insgesamt wird ein Bandmaterial 3 mit hoher Fertigungsgenauigkeit hinsichtlich der Planheit erreicht.

### Bezugszeichenliste

- 2: Vorrichtung
- 3: Bandmaterial
- 4, 4': Projektionsoptik
- 5, 5': Projektionsmuster
- 6: Oberfläche
- 7: Kamera
- 8, 8': Bandkante
- 9: Projektionsstrahl/Zentralstrahl
- 10: Bearbeitungsanlage
- 11, 11': Coil
- 12: Bandvorschubeinrichtung
- 13: Bearbeitungsvorrichtung
- 14: Bandvorschubeinrichtung
- 15, 15': Vorschubrollen
- 16, 16': Vorschubrollen
- 17, 17': Walzen
- 18: Blechdickenmessung
- 19, 19': Bandabschnitt
- 20: Unregelmäßigkeit
- 21, 21': Bandabschnitt
- 22, 22': Haspel
- a: Projektionswinkel
- B: Breite
- D: Dicke
- E: Ebene
- F: Kraft
- L: Länge
- *ℓ*: Linie
- M: Mitte
- P: Position
- X: Vorschubrichtung
- Y: Querrichtung

## Patentansprüche

1. Verfahren zum Ermitteln der Planheit von bewegtem Bandmaterial, mit den Schritten:
Bewegen des Bandmaterials (3) durch eine Bandbearbeitungsvorrichtung;
Erzeugen zumindest eines Projektionsmusters (5, 5') auf der Oberfläche (6) des Bandmaterials (3) mittels einer projektionsgebenden Optik (4, 4'), wobei das Projektionsmuster (5, 5') von einer relativ zur Mittelebene (M) des Bandmaterials (3) seitlich versetzten Position (P) auf die Oberfläche (6) des Bandmaterials (3) projiziert wird, derart, dass ein zwischen der Oberfläche (6) des Bandmaterials (3) und einem Projektionsstrahl (9) gebildeter Projektionswinkel (α) zwischen 1° und 45° beträgt; und
Erfassen des Projektionsmusters (5, 5') mittels einer Kamera (7), wobei die Kamera (7) in einer Querebene (E) zur Bewegungsrichtung (X) betrachtet oberhalb des Bandmaterials (3) angeordnet wird
**dadurch gekennzeichnet,**
**dass** beim Bewegen des Bandmaterials (3) eine Zugkraft (Fx) von mindestens 20 N/mm² auf das Bandmaterial (3) einwirkt, und
**dass** das zumindest eine Projektionsmuster (5, 5') in Form eines Projektionsgitters auf die Oberfläche (6) projiziert wird.

2. Verfahren nach Anspruch 1,
**dadurch gekennzeichnet,**
**dass** die projektionsgebende Optik (4, 4') in einer Querebene (E) zur Bewegungsrichtung (X) betrachtet gegenüber dem Bandmaterial (3) seitlich versetzt angeordnet wird.

3. Verfahren nach Anspruch 1 oder 2,
**dadurch gekennzeichnet,**
**dass** der zwischen der Oberfläche (6) des Bandmaterials (3) und dem Projektionsstrahl (9) gebildeter Projektionswinkel (a) zwischen 5° und 25° beträgt

4. Verfahren nach einem der Ansprüche 1 bis 3,
**dadurch gekennzeichnet,**
**dass** mehrere projektionsgebende Optiken (4, 4') verwendet werden, die jeweils ein Projektionsmuster (5, 5') auf dem Bandmaterial (3) erzeugen, wobei die Projektionsmuster (5, 5') relativ zueinander versetzt auf dem Bandmaterial (3) erzeugt werden, wobei die Projektionsmuster (5, 5') in Bewegungsrichtung (X) und/oder quer zur Bewegungsrichtung (X) des Bandmaterials (3) versetzt zueinander erzeugt werden.

5. Verfahren nach einem der Ansprüche 1 bis 4,
**dadurch gekennzeichnet,**
**dass** das zumindest eine Projektionsmuster (5, 5') in Bewegungsrichtung (X) des Bandmaterials (3) mit einer Erstreckung (L) von weniger als 100 cm und/oder quer zur Bewegungsrichtung über die gesamte Breite (B) des Bandmaterials (3) auf die Oberfläche (6) projiziert wird.

6. Verfahren nach einem der Ansprüche 1 bis 5,
**dadurch gekennzeichnet,**
**dass** das zumindest eine Projektionsmuster (5, 5') in Bewegungsrichtung (X) des Bandmaterials (3) mit einer Erstreckung (L) von mindestens 7 cm auf die Oberfläche (6) projiziert wird.

7. Verfahren nach einem der Ansprüche 1 bis 6,
**dadurch gekennzeichnet,**
**dass** das zumindest eine Projektionsmuster (5, 5') mit einem Raster erzeugt wird, wobei ein Rastermaß zwischen sich wiederholenden Rasterpunkten zwischen 0,7 mm und 100 mm, insbesondere zwischen 1,0 mm und 50 mm beträgt.

8. Verfahren nach einem der Ansprüche 1 bis 7,
**dadurch gekennzeichnet,**
**dass** auf das Bandmaterial (3) eine Zugkraft von mindestens 60 N/mm², gegebenenfalls von mindestens 100 N/mm² einwirkt.

9. Verfahren nach einem der Ansprüche 1 bis 8,
**dadurch gekennzeichnet,**
**dass** das Bandmaterial (3) mit einer Vorschubbewegung von mindestens 15 m/min und/oder höchstens 600 m/min bewegt wird.

10. Verfahren nach einem der Ansprüche 1 bis 9,
**dadurch gekennzeichnet,**
**dass** das Verfahren im Rahmen einer Bearbeitung des Bandmaterials (3) durchgeführt wird, insbesondere im Rahmen eines Walz-, Richt-, und/oder Umwickelprozesses.

11. Verfahren zum Bearbeiten von Bandmaterial mit den Schritten:
Transportieren des Bandmaterials (3) unter Aufbringung einer Zugkraft (Fx) von mindestens 20 N/mm² auf das Bandmaterial (3),
Bearbeiten des Bandmaterials (3) mittels einer Bearbeitungsvorrichtung (13),
Ermitteln der Planheit des Bandmaterials (3) mit dem Verfahren nach einem der Ansprüche 1 bis 10,
Vergleichen eines mittels der Kamera (7) erfassten Projektionsmusters (5, 5') des Bandmaterials (3) mit einem Referenzmuster und Ermittlung eines Vergleichswerts zwischen dem erfassten Projektionsmuster (5, 5') und dem Referenzmuster; und
Regeln eines die Planheit des Bandmaterials (3) beeinflussenden Parameters der mechanischen Bearbeitung auf Basis des ermittelten Vergleichswerts.

12. Bearbeitungsanlage für bewegtes Bandmaterial, umfassend:
eine Bearbeitungsvorrichtung (13) zum Bearbeiten des Bandmaterials (3);
eine Vorrichtung (2) zum Ermitteln der Planheit des Bandmaterials mit zumindest einer projektionsgebenden Optik (4, 4') zum Erzeugen eines Projektionsmusters (5, 5') auf der Oberfläche (6) des Bandmaterials (3), wobei die projektionsgebende Optik (4, 4') derart quer zum Bandmaterial (3) angeordnet und ausgerichtet ist, dass ein von der projektionsgebenden Optik (4, 4') erzeugtes Projektionsmuster (5, 5') unter einem Projektionswinkel (α) von zwischen 1 ° und 45° auf die Oberfläche (6) projiziert wird, und mit zumindest einer Kamera (7) zum Erfassen des zumindest einen Projektionsmusters (5, 5'), wobei die Kamera (7) in einer Querebene (E) zur Bewegungsrichtung (X) betrachtet vertikal oberhalb des Bandmaterials (3) angeordnet ist;
**dadurch gekennzeichnet,**
**dass** eine Bandvorschubeinrichtung (14, 22') vorgesehen ist, die der Vorrichtung (2) zum Ermitteln der Planheit nachgelagert ist und die ausgestaltet ist, um das Bandmaterial (3) unter Einwirkung von Zugkräften (Fx) von mindestens 20 N/mm² zu bewegen, und
**dass** die projektionsgebende Optik (4, 4') ausgestaltet ist, um ein Projektionsmuster (5, 5') in Form eines Projektionsgitters auf die Oberfläche (6) des Bandmaterials zu projizieren.

13. Bearbeitungsanlage nach Anspruch 12,
**dadurch gekennzeichnet,**
**dass** mehrere projektionsgebende Optiken (4, 4') vorgesehen sind, die auf derselben Seite des Bandmaterials (3) in Vorschubrichtung (X) des Bandmaterials versetzt zueinander angeordnet sind, und/oder
die auf entgegengesetzten Seiten des Bandmaterials (3) angeordnet sind.

14. Bearbeitungsanlage nach Anspruch 12 oder 13,
**dadurch gekennzeichnet,**
**dass** die zumindest eine projektionsgebende Optik (4, 4') eine Lichtquelle, insbesondere eine Laserlichtquelle oder eine LED-Lichtquelle, oder eine Licht reflektierende Optik, insbesondere ein Spiegel, ist.

15. Bearbeitungsanlage nach einem der Ansprüche 12 bis 14,
**dadurch gekennzeichnet,**
**dass** die Kamera (7) und die projektionsgebende Optik (4, 4') an separaten Halterungen befestigt sind, wobei die Kamera (7) insbesondere schwingungsentkoppelt gelagert ist.

## Claims

1. Method for determining the flatness of moving strip material, comprising the steps of:
moving the strip material (3) through a strip processing device;
generating at least one projection pattern (5, 5') on the surface (6) of the strip material (3) by means of projection-generating optics (4, 4'),
wherein the projection pattern (5, 5') is projected from a position (P) laterally offset relative to the center plane (M) of the strip material (3) onto the surface (6) of the strip material (3) such that a projection angle (α) formed between the surface (6) of the strip material (3) and a projection beam (9) is between 1° and 45°; and
detecting the projection pattern (5, 5') by means of a camera (7), wherein the camera (7) is arranged above the strip material (3), if viewed in a transverse plane (E) with respect to the direction of movement (X),
**characterized in**
**that** a tensile force (Fx) of at least 20 N/mm² acts on the strip material (3) when moving the strip material (3), and
**that** the at least one projection pattern (5, 5') is projected onto the surface (6) in the form of a projection grid.

2. Method according to claim 1,
**characterized in**
**that** in a transverse plane (E) with respect to the direction of movement (X) the projection-generating optics (4, 4') is arranged laterally offset with respect to the strip material (3).

3. Method according to claim 1 or 2,
**characterized in**
**that** the projection angle (α) formed between the surface (6) of the strip material (3) and the projection beam (9) is between 5° and 25°.

4. Method according to any of claims 1 to 3,
**characterized in**
**that** a plurality of projection-generating optics (4, 4') are used, each of which produces a projection pattern (5, 5') on the strip material (3), wherein the projection patterns (5, 5') are produced on the strip material (3) offset relative to one another, wherein the projection patterns (5, 5') are produced offset relative to one another in the direction of movement (X) and/or transversely to the direction of movement (X) of the strip material (3).

5. Method according to any of claims 1 to 4,
**characterized in**
**that** the at least one projection pattern (5, 5') is projected onto the surface (6) with an extension (L) of less than 100 cm in the direction of movement (X) of the strip material (3) and/or transverse to the direction of movement over the entire width (B) of the strip material (3).

6. Method according to any of claims 1 to 5,
**characterized in**
**that** the at least one projection pattern (5, 5') is projected onto the surface (6) with an extension (L) of at least 7 cm in the direction of movement (X) of the strip material (3).

7. Method according to any of claims 1 to 6,
**characterized in**
**that** the at least one projection pattern (5, 5') is produced with a grid, wherein a grid dimension between repeating grid points is between 0.7 mm and 100 mm, in particular between 1.0 mm and 50 mm.

8. Method according to any of claims 1 to 7,
**characterized in**
**that** a tensile force of at least 60 N/mm², possibly of at least 100 N/mm², acts on the strip material (3).

9. Method according to any of claims 1 to 8,
**characterized in**
**that** the strip material (3) is moved with a feed movement of at least 15 m/min and/or at most 600 m/min.

10. Method according to any of claims 1 to 9,
**characterized in**
**that** the method is carried out within the course of processing the strip material (3), in particular within the course of a rolling, straightening and/or rewinding process.

11. Method for processing strip material comprising the steps of:
transporting the strip material (3) under application of a tensile force (Fx) of at least 20 N/mm² to the strip material (3),
processing the strip material (3) by means of a processing device (13),
determining the flatness of the strip material (3) by the method according to any of claims 1 to 10,
comparing a projection pattern (5, 5') of the strip material (3) detected by the camera (7) with a reference pattern and determining a comparison value between the detected projection pattern (5, 5') and the reference pattern; and
controlling of a parameter of mechanical processing, that influences the flatness of the strip material (3), on the basis of the determined comparison value.

12. Processing arrangement for moving strip material, comprising:
a processing device (13) for processing the strip material (3);
a device (2) for determining the flatness of the strip material with at least one projection-generating optics (4, 4') for producing a projection pattern (5, 5') on the surface (6) of the strip material (3), wherein the projection-generating optics (4, 4') are arranged and aligned transversely to the strip material (3) such that a projection pattern (5, 5') produced by the projection-generating optics (4, 4') is projected onto the surface (6) with a projection angle (α) of between 1° and 45°, and with at least one camera (7) for detecting the at least one projection pattern (5, 5'), wherein the camera (7) is arranged above the strip material (3), if viewed in a transverse plane (E) with respect to the direction of movement (X);
**characterized in**
**that** a strip feed device (14, 22') is provided, which is configured downstream of the device (2) for determining the flatness and which is arranged to move the strip material (3) under the influence of tensile forces (Fx) of at least 20 N/mm², and
**that** the projection-generating optics (4, 4') is configured to project a projection pattern (5, 5') in the form of a projection grid onto the surface (6) of the strip material.

13. Processing arrangement according to claim 12,
**characterized in**
**that** a plurality of projection-generating optics (4, 4') are provided which are arranged on the same side of the strip material (3) offset with respect to one another in the feed direction (X) of the strip material, and/or
which are arranged on opposite sides of the strip material (3).

14. Processing arrangement according to claim 12 or 13,
**characterized in**
**that** the at least one projection-generating optics (4, 4') is a light source, in particular a laser light source or an LED light source, or a light-reflecting optics, in particular a mirror.

15. Processing arrangement according to any of claims 12 to 14,
**characterized in**
**that** the camera (7) and the projection-generating optics (4, 4') are fastened to separate mountings, wherein the camera (7) is supported in particular vibration-decoupled.

## Revendications

1. Procédé permettant de déterminer la planéité d'un matériau en bande déplacé avec les étapes suivantes :
déplacer le matériau en bande (3) par un dispositif de traitement de bande,
générer d'au moins un modèle de projection (5, 5') sur la surface (6) du matériau en bande (3) au moyen d'un système optique générant une projection (4, 4'), sachant que le modèle de projection (5, 5') est projeté sur la surface (6) du matériau en bande (3) depuis une position (P) latéralement déportée par rapport au plan médian (M) du matériau en bande (3) de telle manière qu'un angle de projection (α) formé entre la surface (6) du matériau en bande (3) et un faisceau de projection (9) se situe entre 1° et 45°, et
saisie du modèle de projection (5, 5') au moyen d'une caméra (7), sachant que la caméra (7) est disposée, vue au-dessus du matériau en bande (3), dans un plan transversal (E) en direction du déplacement (X),
**caractérisé en ce que**
lorsque le déplacement du matériau en bande (3) est déplacer, une force de traction (Fx) d'au moins 20 N/mm² agit sur le matériau en bande (3), et
**en ce qu'**au moins un modèle de projection (5, 5') est projeté sur la surface (6) sous la forme d'une grille de projection.

2. Procédé selon la revendication 1,
**caractérisé en ce que**
le système optique générant une projection (4, 4') est disposé, vu par rapport au matériau en bande (3), latéralement déporté dans un plan transversal (E) en direction du déplacement (X).

3. Procédé selon la revendication 1 ou 2, **caractérisé en ce que** l'angle de projection (α) formé entre la surface (6) du matériau en bande (3) et le faisceau de projection (9) se situe entre 5° et 25°.

4. Procédé selon l'une quelconque des revendications 1 à 3,
**caractérisé en ce que**
plusieurs systèmes optiques générant une projection (4, 4') sont employés, qui produisent respectivement un modèle de projection (5, 5') sur le matériau en bande (3), sachant que les modèles de projection (5, 5') sont produits déportés sur le matériau en bande (3) l'un par rapport à l'autre, sachant que les modèles de projection (5, 5') sont produits déportés l'un par rapport à l'autre en direction du déplacement (X) et/ou transversalement à la direction du déplacement (X) du matériau en bande (3).

5. Procédé selon l'une quelconque des revendications 1 à 4,
**caractérisé en ce qu'**
au moins un modèle de projection (5, 5') est projeté sur la surface (6) en direction du déplacement (X) du matériau en bande (3) avec une extension (L) de moins de 100 cm et/ou transversalement à la direction du déplacement sur toute la largeur (B) du matériau en bande (3).

6. Procédé selon l'une quelconque des revendications 1 à 5,
**caractérisé en ce qu'**
au moins un modèle de projection (5, 5') est projeté sur la surface (6) en direction du déplacement (X) du matériau en bande (3) avec une extension (L) d'au moins 7 cm.

7. Procédé selon l'une quelconque des revendications 1 à 6,
**caractérisé en ce qu'**
au moins un modèle de projection (5, 5') est produit avec une trame, sachant qu'une mesure de trame entre les points de trame se répétant se situe entre 0,7 mm et 100 mm, notamment entre 1,0 mm et 50 mm.

8. Procédé selon l'une quelconque des revendications 1 à 7,
**caractérisé en ce qu'**
une force de traction d'au moins 60 N/mm², le cas échéant d'au moins 100 N/mm² agit sur le matériau en bande (3).

9. Procédé selon l'une quelconque des revendications 1 à 8,
**caractérisé en ce que**
le matériau en bande (3) est déplacé avec un mouvement d'avance d'au moins 15 m/min et/ou au maximum de 600 m/min.

10. Procédé selon l'une quelconque des revendications 1 à 9,
**caractérisé en ce que**
le procédé est exécuté dans le cadre d'un traitement du matériau en bande (3), notamment dans le cadre d'un processus de laminage, de dressage et/ou d'enroulement.

11. Procédé destiné au traitement du matériau en bande avec les étapes suivantes :
transport du matériau en bande (3) en appliquant une force de traction (Fx) d'au moins 20 N/mm² sur le matériau en bande (3),
traitement du matériau en bande (3) au moyen d'un dispositif de traitement (13),
détermination de la planéité du matériau en bande (3) avec le procédé selon l'une quelconque des revendications 1 à 10,
comparaison d'un modèle de projection (5, 5') du matériau en bande (3) saisi au moyen de la caméra (7) avec un modèle de référence et détermination d'une valeur de comparaison entre le modèle de projection saisi (5, 5') et le modèle de référence, et
réglage d'un paramètre du traitement mécanique influençant la planéité du matériau en bande (3) sur la base de la valeur de comparaison déterminée.

12. Installation de traitement pour matériau en bande déplacé, comprenant :
un dispositif de traitement (13) pour traiter le matériau en bande (3),
un dispositif (2) permettant de déterminer la planéité du matériau en bande avec au moins un système optique générant une projection (4, 4') pour produire un modèle de projection (5, 5') sur la surface (6) du matériau en bande (3), sachant que le système optique générant une projection (4, 4') est disposé et orienté transversalement au matériau en bande (3) de telle manière qu'un modèle de projection (5, 5') produit par le système optique générant une projection (4, 4') est projeté sur la surface (6) sous un angle de projection (α) se situant entre 1° et 45° et avec au moins une caméra (7) pour la saisie d'au moins un modèle de projection (5, 5'), sachant que la caméra (7) est disposée dans un plan transversal (E) en direction du déplacement (X), vue verticalement au-dessus du matériau en bande (3),
**caractérisée en ce qu'**
un système d'avance de bande (14, 22') est prévu qui est logé en aval du dispositif (2) pour déterminer la planéité et qui est équipé pour déplacer le matériau en bande (3) sous l'effet des forces de traction (Fx) d'au moins 20 N/mm², et
**en ce que** le système optique générant une projection (4, 4') est équipé pour projeter sur la surface (6) du matériau en bande, un modèle de projection (5, 5') sous la forme d'une grille de projection.

13. Installation de traitement selon la revendication 12,
**caractérisée en ce que**
plusieurs systèmes optiques générant une projection (4, 4') sont prévus, qui sont disposés déportés l'un par rapport à l'autre sur le même côté du matériau en bande (3) dans la direction d'avance (X) du matériau en bande et/ou sont disposés sur les côtés opposés du matériau en bande (3).

14. Installation de traitement selon la revendication 12 ou 13,
**caractérisée en ce qu'**
au moins un système optique générant une projection (4, 4') est une source lumineuse, notamment une source lumineuse laser ou une source lumineuse à DEL ou un système optique réfléchissant de la lumière, notamment un miroir.

15. Installation de traitement selon l'une quelconque des revendications 12 à 14,
**caractérisée en ce que**
la caméra (7) et le système optique générant une projection (4, 4') sont fixés à des fixations séparées, sachant que la caméra (7) est logée notamment découplée de toute vibration.
